# EUROPÄISCHE PATENTSCHRIFT

(11) **EP 0 553 639 B1**
(45) Veröffentlichungstag und Bekanntmachung des Hinweises auf die Patenterteilung: **16.10.1996**
(21) Anmeldenummer: 93100372.7
(22) Anmeldetag: 13.01.1993
(51) Int. Cl.: B62D 29/04, B60R 19/02, B09B 3/00

(54) **Kraftfahrzeugkarosserie**
Motor vehicle bodywork
Carrosserie de véhicule automobile

(30) Priorität: 30.01.1992 DE 4202585
(43) Veröffentlichungstag der Anmeldung: 04.08.1993
(73) Patentinhaber: Adam Opel Aktiengesellschaft, 65428 Rüsselsheim (DE); General Motors Espana, S.A., Figueruelas (Zaragoza) (ES)
(72) Erfinder: Jüllig, Karl, W-6501 Dalheim (DE); Kiefer, Bernd, Dipl.-Ing., W-6085 Nauheim (DE)
(74) Vertreter: Bergerin, Ralf, Dipl.-Ing.

(56) Entgegenhaltungen:
- DE-A- 2 548 398
- DE-A- 3 402 456
- DE-A- 3 817 842
- US-A- 4 030 735
- US-A- 4 974 891

## Beschreibung

Die Erfindung betrifft eine Kraftfahrzeugkarosserie mit einem Kunststoffteil, welches mittels zumindest eines durch ein Loch des Kunststoffteiles führenden Befestigungsteiles mit der Kraftfahrzeugkarosserie verbunden ist.

An heutigen Kraftfahrzeugkarosserien sind zahlreiche Kunststoffteile befestigt, beispielsweise die Stoßfänger, Spoiler, Ziergitter, Innenraumverkleidung oder Konsole. Diese Teile müssen bei der Entsorgung eines Kraftfahrzeugs von der Kraftfahrzeugkarosserie demontiert werden, um den Kunststoff wiederverwerten zu können und zur Reduzierung der Leichtmüllfraktion, welche heute auf Deponien abgelagert wird. Es ist deshalb wünschenswert, daß für eine Wiederverwertung zu demontierende Bauteile möglichst schnell trennbar mit der Karosserie verbunden sind, wobei es nicht darauf ankommt, daß das Kunststoffteil unbeschädigt bleibt. Ein solches leicht lösbares, als Stoßfängerüberzug ausgebildetes Kunststoffteil zeigt beispielsweise die DE-A-38 17 842. Bei ihr ist das Kunststoffteil auf dem Stoßfänger durch eine Rastverbindung gehalten. Solche Rastverbindungen bergen die Gefahr in sich, daß sie sich bei hoher Beanspruchung selbsttätig lösen. Weiterhin besteht die Gefahr, daß auf diese Weise befestigte Kunststoffteile entwendet werden.

Die US-A-4,030,735, die als nächster Stand der Technik angesehen wird, zeigt einen kompletten, aus Kunststoff bestehenden Stoßfänger entsprechend dem Oberbegriff des Anspruchs 1, welcher lediglich an seiner Unterseite durch Schrauben mit der Karosserie verbunden ist. Hierdurch ist die Gefahr eines Diebstahls zwar geringer als bei einer Befestigung ausschließlich durch Rastverbindungen, jedoch bedingen die Schrauben beim Demontieren des Stoßfängers unerwünschten Arbeitsaufwand.

Der Erfindung liegt das Problem zugrunde, eine Kraftfahrzeugkarosserie der eingangs genannten Art so auszubilden, daß an ihr befestigte Kunststoffteile möglichst rasch zum Zwecke der Wiederverwertung demontiert werden können, ohne daß bei Benutzung des Kraftfahrzeugs die Möglichkeit eines leichten Diebstahls ohne Werkzeug gegeben ist.

Dieses Problem wird erfindungsgemäß dadurch gelöst, daß ein das Loch umgebender Bereich des Kunststoffteils mit diesem über Sollbruchstellen verbunden ist, um ein Ausbrechen dieses Bereiches aus dem Kunststoff des Kunststoffteiles zu ermöglichen.

Durch diese Gestaltung kann man bei der Demontage des Kraftfahrzeugs zum Zwecke der Wiederverwertung von Bauteilen das Kunststoffteil beispielsweise mit einem Brecheisen durch Zerstörung der die Befestigungsteile umgebenden Bereiche sehr rasch und ohne Schwierigkeiten von der Karosserie lösen. Da dieses rasche Lösen nur durch Zerstören des Kunststoffteiles erfolgen kann, besteht bei normaler Nutzung des Kraftfahrzeugs keine Gefahr eines Diebstahls des Kunststoffteiles.

Besonders einfach ist das Kunststoffteil gestaltet, wenn die Sollbruchstellen durch eine um das Loch herum umlaufende Kerbe im Kunststoffteil gebildet sind.

Das Wegbrechen des Kunststoffteiles von der Kraftfahrzeugkarosserie ist besonders einfach und rasch möglich, wenn gemäß einer vorteilhaften Weiterbildung der Erfindung das Kunststoffteil mit Abstand zu dem Loch für das Befestigungsteil ein Fenster zum Einschieben eines gegen die Kraftfahrzeugkarosserie und das Kunststoffteil abstützbaren Brecheisens aufweist.

Das Fenster ist während der Nutzung des Kraftfahrzeugs unsichtbar, so daß das Erscheinungsbild dadurch nicht nachteilig beeinträchtigt wird, wenn das Fenster durch eine aufgrund von Sollbruchstellen wegbrechbare Kunststofffläche verschlossen ist.

Die Vorteile der Erfindung kommen besonders gut zur Geltung, wenn das Kunststoffteil ein von der Frontseite oder Rückseite des Kraftfahrzeugs her gegen die Kraftfahrzeugkarosserie anliegender Stoßfänger ist. Da solche Stoßfänger bei einem Stoß gegen die Karosserie gedrückt werden, haben die Sollbruchstellen hierbei keine nachteiligen Auswirkungen. Sie können deshalb so gestaltet sein, daß durch Zugkräfte ein leichtes Abbrechen der Stoßfänger möglich wird.

Der Einsatz eines Brecheisens zur Demontage der Stoßfänger ist besonders bequem, wenn in der Oberseite des Stoßfängers oberhalb jedes Befestigungsteils mit Abstand zur Kraftfahrzeugkarosserie jeweils das Fenster zum Einschieben des Brecheisens vorgesehen ist.

Die Befestigungsmittel für einen Stoßfänger sind besonders einfach ausgebildet, wenn hierzu Schrauben vorgesehen sind und der Kopf jeder Schraube gegen eine gegen den ausbrechbaren Bereich des Kunststoffteiles anliegende und dort durch am Kunststoffteil angeformte Klipse gehaltene Metallplatte anliegt.

Die Erfindung läßt zahlreiche Ausführungsformen zu. Zur weiteren Verdeutlichung ihres Grundprinzips ist eine davon in der Zeichnung dargestellt und wird nachfolgend beschrieben. In ihr zeigen die
- Fig. 1: einen senkrechten Schnitt durch einen Teilbereich einer Kraftfahrzeugkarosserie mit einem daran befestigten Kunststoffteil,
- Fig. 2: eine Draufsicht auf einen Teilbereich des Kunststoffteils in Richtung des Pfeils II in Figur 1,
- Fig. 3: einen Blick auf eine durch einen Pfeil III in Figur 1 gekennzeichnete Einzelheit,
- Fig. 4: einen Schnitt durch einen in Fig. 3 mit IV gekennzeichneten Bereich durch die Anordnung gemäß Figur 3.

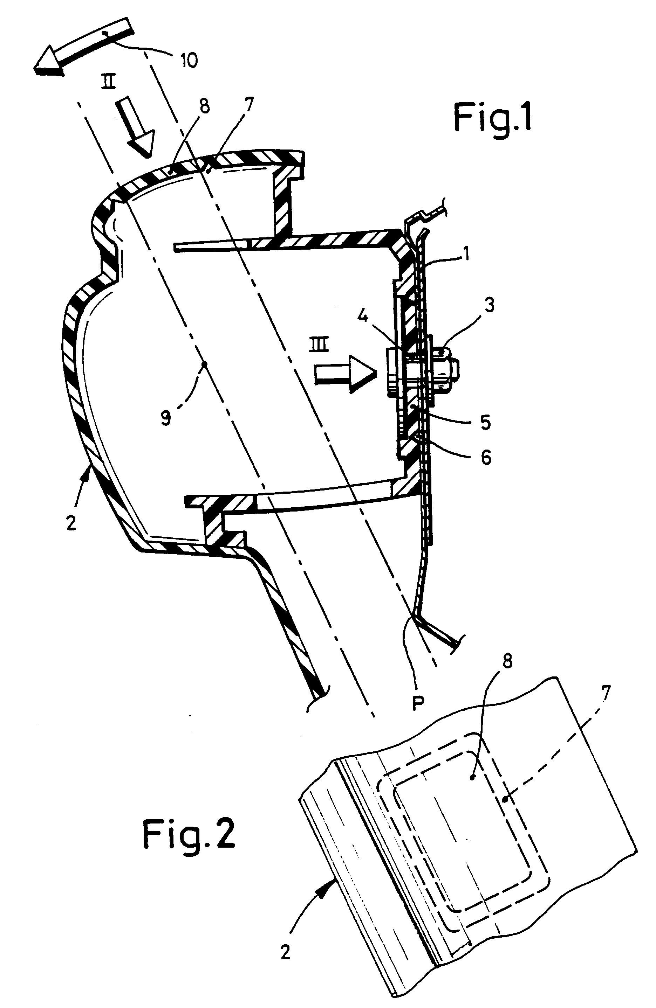

Die Figur 1 zeigt einen Bereich einer Kraftfahrzeugkarosserie 1, gegen welche ein als Stoßfänger ausgebildetes Kunststoffteil 2 anliegt. Zur Befestigung des Kunststoffteiles 2 dienen Befestigungsteile 3, bei denen es sich bei diesem Ausführungsbeispiel um Schrauben handelt, welche jeweils durch ein Loch 4 im Kunststoffteil 2 geführt sind.

Wichtig für die Erfindung ist, daß das Loch 4 von einem Bereich 5 im Kunststoffteil 2 umgeben ist, welcher mit dem Kunststoffteil 2 über Sollbruchstellen 6 Verbindung hat. Bei diesen Sollbruchstellen 6 kann es sich um eine das Loch konzentrisch umgebende Kerbe handeln.

Die Figur 1 zeigt weiterhin, daß in einem oberen Bereich des Kunststoffteiles 2 ein durch eine umlaufende Kerbe 7 aufbrechbares Fenster 8 gebildet ist. Durch dieses Fenster 8 kann man ein teilweise strichpunktiert dargestelltes Brecheisen 9 in das Kunststoffteil 2 derart einschiedaß es sich weiter unten an einem Punkt P gegen die Kraftfahrzeugkarosserie abstützt. Kippt man anschließend das Brecheisen in Richtung eines Pfeiles 10, also entgegen dem Uhrzeigersinn, dann bricht das Kunststoffteil 2 von der Kraftfahrzeugkarosserie 1 los, wobei nur die Bereiche 5 an ihr verbleiben.

Die Figur 2 zeigt, daß das Fenster 8 im Kunststoffteil 2 durch einen entsprechenden Verlauf der Kerbe 7 rechteckigen Querschnitt hat.

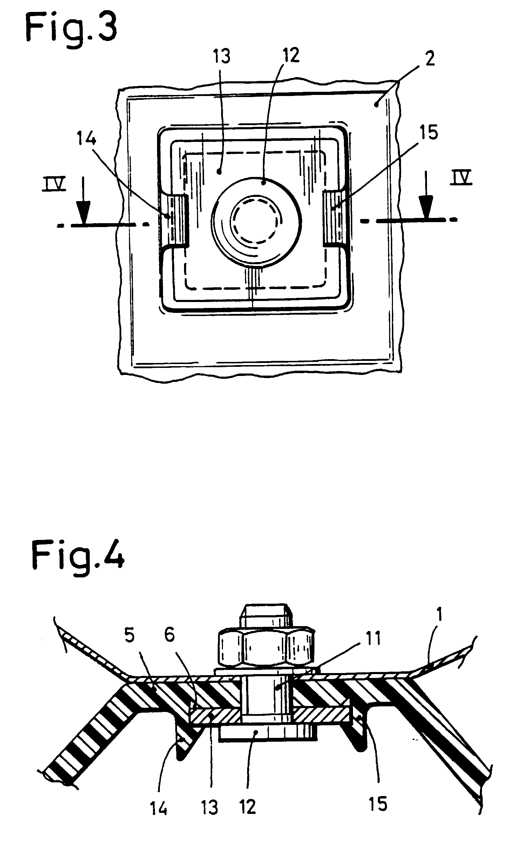

Die Figuren 3 und 4 zeigen im Maßstab gegenüber Figur 1 vergrößert, wie das Kunststoffteil 2 an der Kraftfahrzeugkarosserie 1 befestigt ist. Wie auch schon die Figur 1 zeigt, dient als Befestigungsteil eine Schraube 11, welche mit ihrem Kopf 12 gegen eine Metallplatte 13 anliegt. Diese Metallplatte 13 wird durch zwei Klipse 14, 15 des Kunststoffteils 2 auf den durch die in Form einer umlaufenden Kerbe 7 gebildete Sollbruchstelle 6 begrenzten Bereich 5 gehalten.

## Patentansprüche

1. Kraftfahrzeugkarosserie mit einem Kunststoffteil, welches mittels zumindest eines durch ein Loch des Kunststoffteiles führenden Befestigungsteiles mit der Kraftfahrzeugkarosserie verbunden ist, **dadurch gekennzeichnet**, daß ein das Loch (4) umgebender Bereich (5) des Kunststoffteils (2) mit diesem über Sollbruchstellen (6) verbunden ist, um ein Ausbrechen dieses Bereiches (5) aus dem Kunststoff des Kunststoffteiles (2) zu ermöglichen.

2. Kraftfahrzeugkarosserie nach Anspruch 1, **dadurch gekennzeichnet**, daß die Sollbruchstellen (6) durch eine um das Loch (4) herum umlaufende Kerbe (7) im Kunststoffteil (2) gebildet sind.

3. Kraftfahrzeugkarosserie nach den Ansprüchen 1 oder 2, **dadurch gekennzeichnet**, daß das Kunststoffteil (2) mit Abstand zu dem Loch (4) für das Befestigungsteil (3) ein Fenster (8) zum Einschieben eines gegen die Kraftfahrzeugkarosserie (1) und das Kunststoffteil (2) abstützbaren Brecheisens (9) aufweist.

4. Kraftfahrzeugkarosserie nach zumindest einem der vorangehenden Ansprüche, **dadurch gekennzeichnet**, daß das Fenster (8) durch eine aufgrund von Sollbruchstellen (Kerbe 7) wegbrechbare Kunststofffläche verschlossen ist.

5. Kraftfahrzeugkarosserie nach Anspruch 4, **dadurch gekennzeichnet**, daß das Kunststoffteil (2) ein von der Frontseite oder Rückseite des Kraftfahrzeugs her gegen die Kraftfahrzeugkarosserie (1) anliegender Stoßfänger ist.

6. Kraftfahrzeugkarosserie nach Anspruch 5, **dadurch gekennzeichnet**, daß in der Oberseite des Stoßfängers (Kunststoffteil 2) oberhalb jedes Befestigungsteils (3) mit Abstand zur Kraftfahrzeugkarosserie (1) jeweils das Fenster (8) zum Einschieben des Brecheisens (9) vorgesehen ist.

7. Kraftfahrzeugkarosserie nach zumindest einem der vorangehenden Ansprüche, **dadurch gekennzeichnet**, daß als Befestigungsmittel für das Kunststoffteil (2) Schrauben (11) vorgesehen sind und der Kopf (12) jeder Schraube (11) gegen eine gegen den ausbrechbaren Bereich (5) des Kunststoffteiles (2) anliegende und dort durch am Kunststoffteil (2) angeformte Klipse (14, 15) gehaltene Metallplatte (13) anliegt.

## Claims

1. Motor vehicle body with a plastic portion which is connected to the motor vehicle body by means of at least one fastening portion passing through a hole of the plastic portion, characterised in that a region (5) of the plastic portion (2) surrounding the hole (4) is connected to the plastic portion (2) by predetermined breaking points (6) in order to allow this region (5) to be broken out of the plastic of the plastic portion (2).

2. Motor vehicle body according to claim 1, characterised in that the predetermined breaking points (6) are formed by a notch (7) extending around the hole (4) in the plastic portion (2).

3. Motor vehicle body according to claim 1 or 2, characterised in that the plastic portion (2) at a distance from the hole (4) for the fastening portion (3) comprises an aperture (8) for the insertion of a crowbar (9) which can be supported against the motor vehicle body (1) and the plastic portion (2).

4. Motor vehicle body according to one or more of the preceding claims, characterised in that the aperture (8) is closed by a plastic surface which can be broken away on account of predetermined breaking points (notch 7).

5. Motor vehicle body according to claim 4, characterised in that the plastic portion (2) is a bumper abutting against the motor vehicle body (1) from the front or rear side of the motor vehicle.

6. Motor vehicle body according to claim 5, characterised in that in the upper side of the bumper (plastic portion 2) above each fastening portion (3) at a distance from the motor vehicle body (1) is provided in each case the aperture (8) for insertion of the crowbar (9).

7. Motor vehicle body according to one or more of the preceding claims, characterised in that bolts (11) are provided as the fastening means for the plastic portion (2), and the head (12) of each bolt (11) abuts against a metal plate (13) abutting against the region (5) of the plastic portion (2) which can be broken out and held there by clips (14, 15) formed integrally with the plastic portion (2).

## Revendications

1. Carrosserie de véhicule automobile comportant un élément en matériau synthétique qui est lié à la carrosserie du véhicule au moyen d'au moins un élément de fixation passant par un trou de l'élément en matériau synthétique, caractérisée par le fait qu'une zone (5) de l'élément (2) en matériau synthétique entourant le trou (4) est liée audit élément par l'intermédiaire de points (6) destinés à la rupture afin de permettre une séparation de cette zone (5) d'avec le matériau synthétique de l'élément (2) en matériau synthétique.

2. Carrosserie de véhicule automobile selon la revendication 1, caractérisée par le fait que les points (6) destinés à la rupture sont formés d'une entaille (7) dans l'élément (2) en matériau synthétique entourant le trou (4).

3. Carrosserie de véhicule automobile selon la revendication 1 ou 2, caractérisée par le fait que l'élément (2) en matériau synthétique est pourvu, à distance du trou (4) pour l'élément de fixation (3), d'une fenêtre (8) pour la mise en place d'un pied de biche prenant appui contre la carrosserie (1) du véhicule et contre l'élément (2) en matériau synthétique.

4. Carrosserie de véhicule automobile selon au moins une des revendications précédentes, caractérisée par le fait que la fenêtre (8) est fermée par une surface en matériau synthétique qui peut être éliminée grâce à des points destinés à la rupture (entaille 7).

5. Carrosserie de véhicule automobile selon la revendication 4, caractérisée par le fait que l'élément (2) en matériau synthétique est un pare-chocs appliqué contre la carrosserie (1) du véhicule à l'avant ou à l'arrière dudit véhicule.

6. Carrosserie de véhicule automobile selon la revendication 5, caractérisée par le fait qu'une fenêtre (8) est prévue dans la face supérieure du pare-chocs (élément (2) en matériau synthétique), au-dessus de chaque élément de fixation (3), à distance de la carrosserie (1) du véhicule automobile, aux fins d'insérer le pied de biche (9).

7. Carrosserie de véhicule automobile selon au moins une des revendications précédentes, caractérisée par le fait que des vis (11) sont prévues en tant qu'élément de fixation pour l'élément (2) en matériau synthétique et que la tête (12) de chaque vis (11) vient en appui contre une plaque métallique (13) qui est appliquée contre la zone (5) défonçable et est maintenue par des moyens d'encliquetage (14, 15) moulés d'une pièce sur l'élément (2) en matériau synthétique.
